# EUROPÄISCHE PATENTANMELDUNG

(11) **EP 0 915 396 A2**
(43) Veröffentlichungstag der Anmeldung: **12.05.1999**
(21) Anmeldenummer: 98120917.4
(22) Anmeldetag: 04.11.1998
(51) Int. Cl.: G03H 1/04, G07D 7/00, B42D 15/10

(54) **Verfahren und Vorrichtung zur Herstellung eines variablen Sicherheitshologramms**

(30) Priorität: 06.11.1997 DE 19748967
(71) Anmelder: BUNDESDRUCKEREI GmbH, D-10958 Berlin (DE)
(72) Erfinder: Paugstadt, Ralf Dr., 10115 Berlin (DE); Franz-Burgholz, Arnim, 10967 Berlin (DE)
(74) Vertreter: Riebling, Peter, Dr.-Ing.

(57) **Zusammenfassung**

Die Erfindung betrifft ein Verfahren und eine Vorrichtung zur Herstellung eines variablen Sicherheitshologramms, wobei von einer Lichtquelle ein Referenzstrahlenbündel und ein oder mehrere, eine Bildinformation enthaltende Objektstrahlenbündel auf ein lichtempfindliches Substrat gerichtet werden und sich dort überlagern. Die Erfindung zeichnet sich dadurch aus, daß die Objektstrahlenbündel durch Reflexion des Referenzstrahlenbündels an einer Mikrospiegelanordnung erzeugt werden, wobei Referenzstrahlenbündel und Objektstrahlenbündel im wesentlichen entgegengesetzt gerichtet sind und im lichtempfindlichen Substrat durch Interferenz eine holographisches Abbild der Bildinformation erzeugen.

## Beschreibung

Die Erfindung betrifft ein Verfahren und eine Vorrichtung zur Herstellung eines variablen Sicherheitshologramms nach dem Oberbegriff des Patentanspruchs 1, insbesondere zur Verwendung mit Wert- und Sicherheitsdokumenten.

Es ist bekannt, sogenannte Reflexionshologramme auf lichtempfindlichen Materialien durch Belichtung mit einer geeigneten Maske herzustellen. Hierbei wird aus einem von einem Kollimator erzeugten Strahlenbündel ein Strahlenbündelanteil ausgekoppelt und über eine Spiegelanordnung im Winkel zu dem erstgenannten Strahlenbündel auf die zu belichtende Fläche gelenkt. Im erstgenannten Strahlenbündel ist hierbei ein Durchlicht-Modulator angeordnet, in dem z.B. eine Maske eines Abbildes, eines Fotos und dergleichen abgebildet ist, so daß das Licht diese ersten Strahlenbündels entsprechend dem Durchlicht durch diese Maske mehr oder weniger abgeschwächt auf die zu belichtende Fläche trifft.
Auf der zu belichtenden Fläche treffen also insgesamt zwei verschiedene Lichtwellenfronten auf, nämlich die erste Lichtwellenfront des gerade auf die zu belichtende Fläche eintreffenden Lichtbündels, welches mit der entsprechenden Information der Maske angereichert ist und die ferner im Winkel auf diese Fläche eintreffende Lichtwellenfront, die als Referenzwelle mit der Objektwelle des ersten Strahlenbündels auf der belichteten Fläche interferiert und dort das Hologramm belichtet.

In Erweiterung dieser bekannten Technik gibt es auch sog. Multiplexreflexionshologramme, welche die vorher beschriebene Technik dahingehend erweitern, daß drei oder mehr verschiedene Strahlenbündel, die unabhängig voneinander sind und die jeweils unabhängige Bildinformationen enthalten, im Winkel zueinander auf die zu belichtende Fläche aufgestrahlt werden und, daß daher von verschiedenen Betrachtungswinkeln aus das auf der Belichtungsfläche erzeugte Hologramm drei oder mehr verschiedene Bilder rekonstruiert, wobei jeweils nur ein Bild aus einem bestimmten Betrachtungswinkel sichtbar ist.

Nachteilig bei einem derartigen Multiplexreflexionshologramm ist, daß man insgesamt drei unterschiedliche Strahlenbündel mit drei unterschiedlichen Bildinhalten benötigt, um eine solche lichtempfindliche Schicht mit einem Hologramm zu belichten. Unter Verwendung der herkömmlichen Anordnungen und Belichtungsverfahren ist dies sehr aufwendig. Hier setzt die Erfindung ein.

Der Erfindung liegt die Aufgabe zugrunde, ein Verfahren und eine Vorrichtung zur Herstellung eines variablen Sicherheitshologramms vorzuschlagen, um mit wesentlich geringerem Aufwand ein Multireflexionshologramm auf einer lichtempfindlichen Schicht zu erzeugen.

Zur Lösung der gestellten Aufgabe ist die Erfindung durch die technische Lehre des Anspruchs 1 gekennzeichnet.

Wesentliches Merkmal der Erfindung ist, daß die einzelnen Strahlenbündel oder Lichtwellenfronten nicht durch mehrfache Auskopplung von Strahlenbündelanteilen einer Lichtquelle erzeugt werden, sondern daß durch eine Vielzahl von Einzelspiegeln einer digitalen Mikrospiegelanordnung aus einem Referenzstrahlenbündel mehrere Objektstrahlenbündel bzw. Reflexionswellenfronten erzeugt werden. Die Mikrospiegelanordnung ist Teil eines digitalen Mikrospiegel-Lichtprozessors, welcher jenseits des zu belichtenden Substrats, gegenüber der Referenzlichtquelle, angeordnet ist.

Der Kern der Erfindung liegt also darin, daß man der einfallenden Lichtwellenfront eine digitale Mikrospiegelanordnung entgegenstellt, welche hinter dem zu belichtenden Substrat angeordnet ist und, daß die Einzelspiegel der digitalen Mikrospiegelanordnung so angesteuert werden, daß die zum positiven Bildinhalt des Bildes gehörenden Pixel in Richtung eines positiven Winkels abgelenkt werden und, daß die zum negativen Bildinhalt gehörenden Pixel um den gleichen Winkelbetrag in die andere Richtung abgelenkt werden.

Auf diese Weise entstehen zwei im Winkel zueinander angeordnete Objektstrahlenbündel, die durch Interferenz mit dem Referenzstrahlenbündel die holografische Information im zu belichtenden Substrat bilden.

Bei der Rekonstruktion des Multiplex-Reflexionshologramms entstehen im Betrachtungswinkel um den positiven Wert dieses Winkels und den negativen Wert dieses Winkels jeweils der positive und negative Bildinhalt des in der digitalen Mikrospiegelanordnung erzeugten Bildes.

Dies setzt voraus, daß die digital ansteuerbaren Mikrospiegel (Einzelspiegel) der digitalen Mikrospiegelanordnung einzeln entsprechend der positiven und negativen Bildinformation eines auf dem Substrat zu belichtenden Schwarz/Weiß-Bildes ausgelenkt werden.

Hinter einem für Hologrammaufnahmen geeigneten Aufnahmematerial wird ein digitaler Mikrospiegel-Lichtprozessor (DMD) angeordnet. Ein DMD besteht aus einem Array von Mikrospiegeln, die zwischen zwei diskreten Winkeln (±Θ) gekippt werden können.
Eine Datenverarbeitungsanlage, z.B. ein PC, steuert den DMD so, daß die Pixel in den schwarzen Bereichen eines Bildes im Winkel +Θ und die Pixel in den weißen Bereichen eines Bildes im Winkel -Θ gekippt sind. Danach wird ein Bild belichtet und um ein Bild weitertransportiert. Das entwickelte Hologramm weist charakteristische, in weißem Licht sichtbare Eigenschaften auf:
- Im Winkel +Θ rekonstruiert sich ein Positiv des Bildes, wobei die schwarzen Bereiche spiegelnd erscheinen.
- Im Winkel -Θ rekonstruiert sich das Negativ des Bildes, wobei die weißen Bereiche spiegelnd erscheinen.
- Da der Winkel Θ typisch etwa 10 Grad ist, rekonstruieren Positiv und Negativ in einem Winkelabstand von ca. 20 Grad.

Bei einem Pupillenstand von 7 cm und einem Abstand des Hologramms vom Auge von ca. 20 cm rekonstruieren das Positiv und das Negativ jeweils im rechten und linken Auge. Daher wird der Beobachter wahrscheinlich in diesem Abstand eine homogene spiegelnde Fläche sehen.

Der Vorteil gegenüber dem Stand der Technik liegt darin, daß ein Hologramm auf dem belichtbaren Substrat erzeugt wird, welches eine hohe Qualität hat, die nur durch die Qualität der Lichtwellenfront begrenzt wird. Dieses Hologramm ist personalisierbar, d.h. bei jedem Vorschub um ein Bild kann jedem Bild eine andere personelle Information zugeordnet werden.

Das Hologramm zeigt mehrere scharf unterscheidbare, leuchtstarke und spektakuläre Ansichten in einem für den Betrachter angenehmen Winkel- und Abstandsbereich.

### Fälschungssicherheit:

Das Hologramm rekonstruiert einen mit ebenen Wellen beleuchteten digitalen Mikrospiegel-Lichtprozessor (DMD) mit Bildinformation.
- Ein Fälscher müßte daher ein Objekt nachstellen und holografieren, daß aus z.B. einer Million verspiegelter Pixel besteht, die nach Bildinformation geordnet, entweder in die Winkel ±Θ reflektieren.
- Um den Nachbau der gesamten Apparatur zu verhindern, kann man beim DMD-Hersteller spezielle Formen der Spiegeloberflächen anfertigen lassen (Linien über die Spiegel ätzen oder ähnliches).

### Kopiersicherheit:

Eine Kopie des Hologramms sollte aufgrund er hohen Auflösung der holografierten Struktur leichter als bei anderen Hologrammen zu erkennen sein.

### Vorteile bei der Herstellung:

- extrem simpler Aufbau der Belichtungsanordnung
- kein extra Referenzstrahl erforderlich
- Strahlteiler, Stabilitäts-, Kohärenz- und Ausleuchtungsproblemen entfallen
- keine Multiplexvorrichtungen, Spaltvorschübe erforderlich,
- Objekt- und Referenzstrahl haben die gleiche Intensität (Optimum für Reflexionshologramme)
- keine Intensitätsverluste in LC-Arrays
- höhere Lichtintensitäten und kürzere Belichtungszeiten möglich
- evtl. Einsatz von Pulslasern möglich, dadurch werden die Stabilitätsanforderungen gelockert
- Die Ansprechzeit der Mikrospiegel ist kleiner als 20 Mikrosekunden

Die Idee ist nicht auf Kontaktanordnungen zwischen DMD und Aufnahmematerial beschränkt.

Um andere Abbildungsmaßstäbe zu erhalten, kann der DMD-Referenzstrahl auch kollimiert werden oder in die Nähe des Aufnahmematerials abgebildet werden.
Die Information des Hologramms kann bequem mit einem CCD-Array wieder ausgelesen werden (ca. 1 Mbit).
Es können auch mehrere Farben in ein Bild belichtet werden. Durch Drehung des DMD können weitere Bilder in anderen Raumwinkeln rekonstruieren.
Durch konvergente oder divergente Strahlen kann der Abbildungsmaßstab verändert werden.
Durch Drehung des Hologramms kann das reelle Bild auf den DMD zulaufenden Lichtstrahlen rekonstruiert werden. Dieses Bild eignet sich sehr gut zum elektronischen Auslesen mit Sensor-Arrays.
Beide Reflexionsbilder können in unterschiedlichen Farben ausgeführt werden( erhöht die Fälschungssicherheit).

In ein Hologramm kann eine Bild-Sequenz belichtet werden (Zweistrahl-Multiplexhologramm).
Das Mikrospiegelanordnung kann mit diffusem Licht beleuchtet werden, um die Information gleichmäßig über das Hologramm aufzuteilen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor. Es zeigen:
- Figur 1:: schematisiert eine Darstellung einer Vorrichtung zur Erzeugung eines Multiplex-Reflexionshologramms;
- Figur 2:: schematisiert in vergrößerter Darstellung die Vorgänge an den Einzelspiegeln einer digitalen Mikrospiegel-Anordnung.

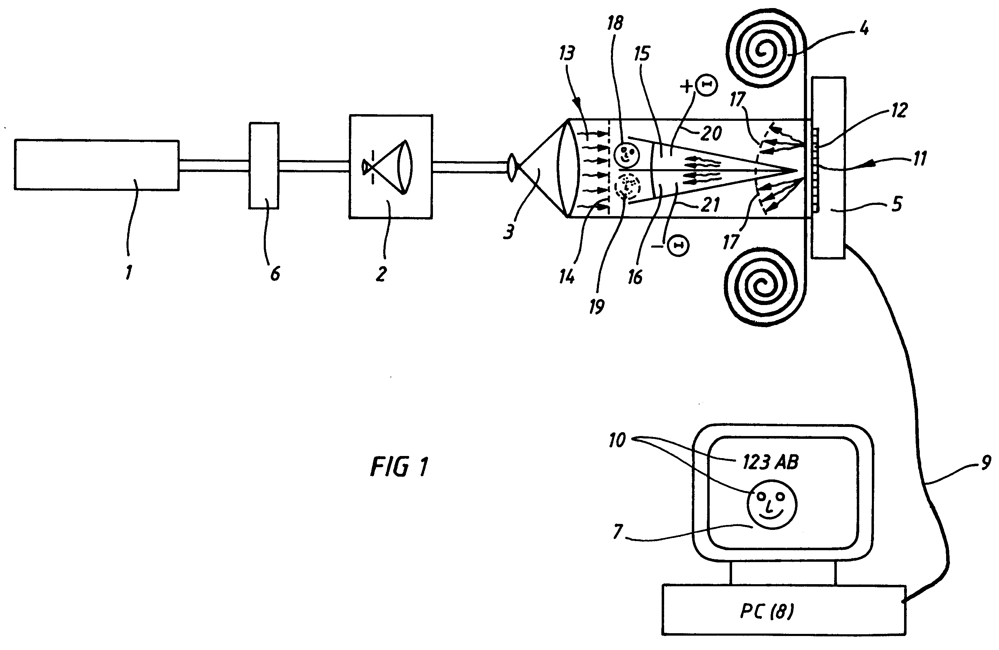

Gemäß Figur 1 wird von einem Laser 1 Licht durch einen Verschluß 6 gelenkt, wobei der Verschluß 6 ein Belichtungsverschluß ist, um das zu belichtende Substrat 4 mit der richtigen Lichtmenge zu belichten.

Das von dem offenen Verschluß 6 durchgelassene Licht durchdringt einen Raumfilter 2, der eine saubere, kohärente Wellenfront erzeugen soll, die durch einen Kollimator 3 auf die Fläche des zu belichtenden Arrays auf dem Belichtungssubstrat 4 aufgeweitet wird.

Der Kollimator 3 bildet also das Referenzstrahlenbündel 13, welches aus einzelnen zueinander parallelen Wellenfronten 14 besteht, die in Pfeilrichtung 22 gegen das Belichtungssubstrat 4 gelenkt werden.

Hinter dem Belichtungssubstrat 4 ist eine digitale Mikrospiegelanordnung 5 befestigt, welche aus in Form einer Spiegelmatrix 11 angeordneten Einzelspiegeln 12,12a,12b... besteht. Es handelt sich beispielsweise um eine Spiegelmatrix von 800 x 640 einzeln ansteuerbaren digitalen Spiegeln 12.

Diese Spiegel 12 werden über ein Steuerkabel 9 von einem Computer 8 angesteuert, welcher ein Bild 7 mit darin enthaltener Bildinformation 10 in elektrische Signale umsetzt und über das Steuerkabel 9 der digitalen Mikrospiegelanordnung 5 zuführt.

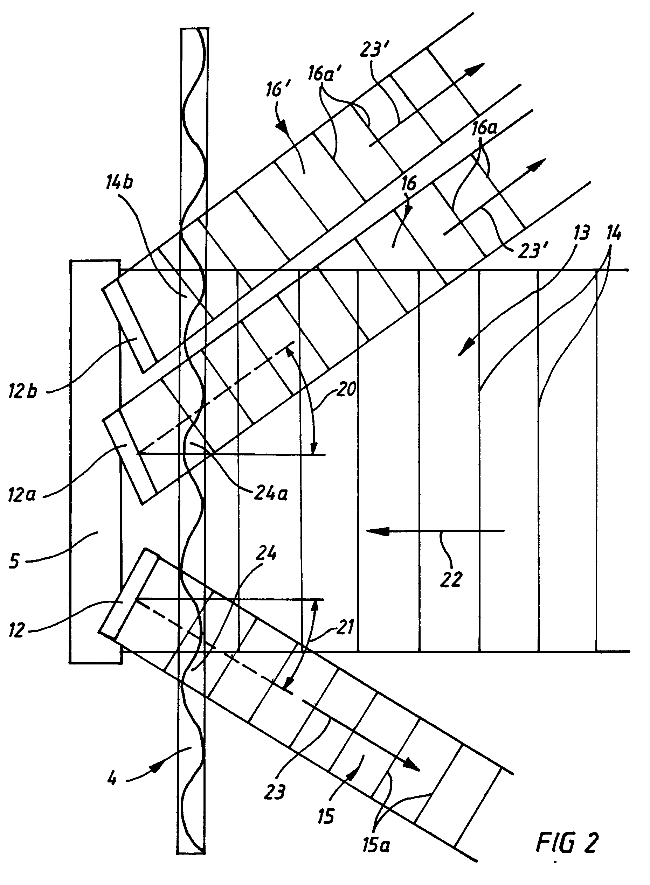

Entsprechend den anliegenden Steuersignalen (bei einem schwarz/weißen Bildinhalt) werden die Einzelspiegel bei positivem Bildinhalt (z.B schwarze Bildbereiche) jeweils um einen positiven Winkel 20 (+Θ) oder bei negativem Bildinhalt (z.B. weiße Bildbereiche) um einen negativen Winkel 21 (-Θ) abgelenkt, so wie dies in Figur 1 und insbesondere Figur 2 dargestellt ist.

Es werden somit zwei unterschiedliche und im Winkel Theta voneinander abweichende Objektbündel 15,16 gebildet, wobei die Reflexionswellenfronten 15a,16a der jeweiligen Objektbündel 15,16 im Winkel von 2 x Θ zueinander verlaufen. Die Objektbündel 15 bzw. 16, 16' breiten sich hierbei in Pfeilrichtung 23 bzw. 23' aus.
Es wird hierbei betont, daß jeder Einzelspiegel 12,12a,12b entsprechend unterschiedlich angesteuert wird, so daß sich an jedem Einzelspiegel jeweils eine zugeordnete Reflexionswellenfront 17 (Figur 1) ergibt.

Die Reflexionswellenfronten 15a,16a interferieren im Bereich des Belichtungssubstrates 4 mit den Wellenfronten 14 des Referenzstrahlenbündels 13 und bilden dort Referenzmuster 24,24a,24b aus, wie dies in Figur 2 dargestellt ist.

Als Beispiel ist in Figur 1 dargestellt, daß das Objektbündel 15 bei der Interferenz mit dem Referenzstrahlenbündel 13 die positive Bildinformation 18 beinhaltet und auf dem Belichtungssubstrat 4 abbildet, während das Objektbündel 16 bei Interferenz mit dem Referenzstrahlenbündel 13 die negative Bildinformation 19 des Bildes 7 auf dem Belichtungssubstrat 4 abbildet.

Hieraus ergibt sich, daß man beispielsweise bei Betrachtung des Belichtungssubstrats 4 in Gegenrichtung zur in Figur 2 eingezeichneten Pfeilrichtung 23 betrachtet, beispielsweise die positive Bildinformation sieht, nicht aber die negative Bildinformation auf dem Belichtungssubstrat. Betrachtet man hingegen das Belichtungssubstrat in Gegenrichtung zur eingezeichneten Pfeilrichtung 23', dann sieht man lediglich die negative Bildinformation, nicht aber die positive Bildinformation. Hieraus ergeben sich die wesentlichen Vorteile, die vorstehend im allgemeinen Beschreibungsteil erwähnt wurden.

Das damit erzielte Ergebnis ist in hohem Maße fälschungssicher, denn es entsteht ein holographisches Bild, aus z.B. 800 x 640 Pixel, von denen jeder Pixel einzeln ansteuerbar war und deshalb auch individuell kopiert werden müßte oder gefälscht werden müßte, um zu dem Gesamtergebnis zu kommen.

### Zeichnungslegende

- 1.: Laser
- 2.: Raumfilter
- 3.: Kollimator
- 4.: Belichtungssubstrat
- 5.: Digitale Mikrospiegelanordnung
- 6.: Verschluß
- 7.: Bild
- 8.: Datenverarbeitungsanlage (Computer)
- 9.: Steuerkabel
- 10.: Bildinformation
- 11.: Spiegelmatrix
- 12.: Einzelspiegel 12a, 12b
- 13.: Referenzstrahlenbündel
- 14.: Wellenfront
- 15.: Objektstrahlenbündel 15a Reflexionswellenfront
- 16.: Objektstrhalenbündel 16a Reflexionswellenfront
- 17.: Reflexionswellenfront
- 18.: positive Bildinformation
- 19.: negative Bildinformation
- 20.: positiver Winkel (Theta +)
- 21.: negativer Winkel (Theta -)
- 22.: Pfeilrichtung
- 23.: Pfeilrichtung
- 24.: Interferenzmuster 24a, 24b

## Patentansprüche

1. Verfahren zur Herstellung eines variablen Sicherheitshologramms, wobei von einer Lichtquelle ein Referenzstrahlenbündel und ein oder mehrere, eine Bildinformation enthaltende Objektstrahlenbündel auf ein lichtempfindliches Substrat gerichtet werden und sich dort überlagern, dadurch gekennzeichnet, daß die Objektstrahlenbündel (15,16) durch Reflexion des Referenzstrahlenbündels (13) an einer Mikrospiegelanordnung (5) erzeugt werden, wobei Referenzstrahlenbündel (13) und Objektstrahlenbündel (15,16) im wesentlichen entgegengesetzt gerichtet sind und im lichtempfindlichen Substrat (4) durch Interferenz eine holographisches Abbild der Bildinformation (10) erzeugen.

2. Verfahren nach Anspruch 1, dadurch gekennzeichnet, daß die Bildinformation (1) digital aufbereitet und in einzelne Bildpunkte unterteilt wird, wobei jeder Bildpunkt einem Mikrospiegel der Mikrospiegelanordnung zugeordnet wird und die Mikrospiegel entsprechend der Information der Bildpunkte angesteuert werden.

3. Verfahren nach einem der Ansprüche 1 oder 2, dadurch gekennzeichnet, daß die Ansteuerung der Mikrospiegel elektronisch erfolgt, wobei die Mikrospiegel zwischen mindestens zwei definierten Winkelstellungen geschwenkt werden können.

4. Verfahren nach einem der Ansprüche 1 bis 3, dadurch gekennzeichnet, daß die zum positiven Bildinhalt der Bildinformation gehörenden Bildpunkte eine Ablenkung der zugeordneten Mikrospiegel um einen definierten positiven Winkel (+Θ) bewirken, während die zum negativen Bildinhalt gehörenden Bildpunkte eine Ablenkung der zugeordneten Mikrospiegel um einen definierten negativen Winkel (-Θ) bewirken.

5. Vorrichtung zur Herstellung eines variablen Sicherheitshologramms, welche umfasst:
- ein zu belichtendes Substrat (4),
- eine Lichtquelle (1), welche ein Referenzstrahlenbündel (13) erzeugt, welches auf das zu belichtende Substrat (4) gerichtet wird,
- eine digital ansteuerbare Mikrospiegelanordnung (5), welche hinter dem zu belichtenden Substrat (4) angeordnet ist und durch Reflexion des Referenzstrahlenbündels (13) in definierten, von der zu belichtenden Bildinformation abhängigen Winkeln ein oder mehrere Objektstrahlenbündel (15,16) erzeugt, die ebenfalls auf das zu belichtende Substrat (4) gerichtet sind.

6. Vorrichtung nach Anspruch 5, dadurch gekennzeichnet, daß die Lichtquelle ein Laser ist.

7. Vorrichtung nach einem der Ansprüche 5 oder 6, dadurch gekennzeichnet, daß die Mikrospiegelanordnung (5) aus einer Vielzahl von einzelnen, um definierte Winkel schwenkbar angeordneten und einzeln ansteuerbaren Mikrospiegeln (12) besteht, die zwischen mindestens zwei diskreten Winkeln (±Θ) gekippt werden können.

8. Vorrichtung nach einem der Ansprüche 5 bis 7, dadurch gekennzeichnet, daß eine Datenverarbeitungsanlage (8) vorhanden ist, welche die Bildinformation (10) aufbereitet und in elektrische Signale umsetzt und damit die einzelnen Mikrospiegel (12) in Abhängigkeit der Bildinformation (10) ansteuert.
